# EUROPEAN PATENT APPLICATION

(11) **EP 4 180 479 A1**
(43) Date of publication of application: **17.05.2023**
(21) Application number: 22205180.7
(22) Date of filing: 03.11.2022
(51) Int. Cl.: C08G 65/26, C08F 4/56, C08F 136/06, C08G 65/30

(54) **AN IMPROVED ONE POT PROCESS FOR THE PREPARATION OF POLY (1, 3-ALKENES)-BLOCK-POLY (ALKYLENE OXIDES) COPOLYMERS**

(30) Priority: 10.11.2021 IN 202141051396
(71) Applicant: Shilpa Medicare Limited, Raichur, Karnataka 584135 (IN)
(72) Inventor: GANUGAPATI, SATYANARAYANA, 584135 RAICHUR (IN); JONNALAGADDA, GOPINATH, 584135 RAICHUR (IN)
(74) Representative: Lecca, Patricia S.

(57) **Abstract**

The present invention relates to an improved process for the preparation of poly (1, 3-alkenes)-block-poly (alkylene oxides) copolymers. Furthermore, this invention also relates to the purification of crude amphiphilic block copolymers PD-b-PAO having oligomers and low molecular weight polymers.

## Description

### FIELD OF THE INVENTION

The present invention relates to an improved process for the preparing of poly (1, 3-alkenes)-block-poly (alkylene oxides) copolymers amphiphilic copolymers. The present invention also pertains to the design and synthesis of well-defined novel amphiphilic PD-b-PAO block copolymers.

In another aspect, the present invention relates to a one-pot process for the preparing of poly (1, 3-alkenes)-block-poly (alkylene oxides) copolymers.

In another aspect of the present invention relates to purification of crude amphiphilic block copolymers PD-b-PAO.

### BACKGROUND OF THE INVENTION

Liposomes, which are composed of naturally occurring lipids have been used to deliver various agents within an organism. Recent research has been directed to synthetic compositions, such as polymersomes, that function similarly in some respects to liposomes. Specific biomolecule systems, like lipids, spontaneously form closed structures when their building blocks are placed in aqueous medial. Polymersomes, however, are vesicles made using amphiphilic diblock and multiblock copolymers where at least one block is hydrophobic and at least one block is hydrophilic. In particular, these diblock and multiblock copolymers can form thick-walled vesicles when placed in an aqueous media. Polymersomes can be stably prepared by a number of techniques that are common to liposomes (Lee et al., Biotechnology and Bioengineering, vol. 73, no. 2, Apr. 20, 2001) such as film rehydration, sonication, and extrusion can generate many-micron giant vesicles as well as monodisperse vesicles with diameters as small as 100 nanometers.

Fundamental studies on AB block copolymer thermodynamics rely on the preparation of monodispersed materials with well-defined molecular weights (MWs) and block volume fractions (fa). This is typically accomplished through a living polymerization technique by sequential monomer addition. Due to the absence of chain transfer and chain termination, living polymerizations allow for precise definition of MW and fa. The most widely used technique for the preparation of narrow dispersive block copolymers is living anionic polymerization.

However, cationic, ring opening metathesis, group transfer, and radical polymerizations have all been used to produce block copolymers with novel pairs of polymeric segments. One limitation of the sequential monomer addition technique is that both monomers must be compatible with the chosen polymerization mechanism. Side reactions such as termination and chain transfer must be avoided in the polymerization of both monomers, and the chosen monomers must both be reactive enough to undergo propagation These requirements limit the number of possible block combinations for a given polymerization mechanism. The synthesis of new materials that a single polymerization mechanism cannot obtain necessitates a different approach. Two methods are reported in the literature to produce a well-defined PD-b-PAO copolymer via Living anionic polymerization process (LAPP).

The polymeric dispersants of this disclosure are block polymers with a hydrophobic block e.g. polybutadiene connected to one or more hydrophilic blocks e.g. polyethylene oxide). Therefore, the chemical linking of these two incompatible materials can be expected to provide the properties of a nonionic surfactant of the alkyl polyether alcohol types, for example nonylphenoxypolyoxyethylene ethanol:

Macromolecules, Vol. 29, No. 22, 1996 discloses a process for the preparation of Poly (1,3-butadiene)-b-poly (ethylene oxide). In this method 1, 3-diene monomer initiated with alkyl lithium initiator followed by end capped with alkene oxide monomer with hydroxyl functionality (PD-OH) and in the second step hydroxyl end group is transformed into active species with potassium naphthalenide that can initiate the living anionic ring-open polymerization of alkylene oxide (AO) to produce PD-b-PEO schematically represented as below. 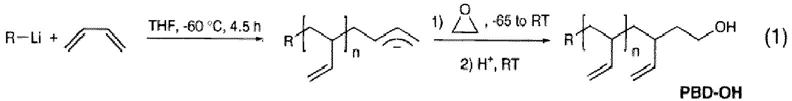 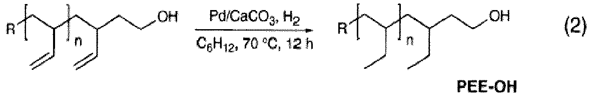 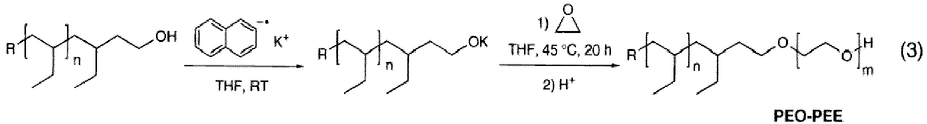 J. Am. Chem. Soc. 2021, 143, 7748-7758 discloses a process for the preparation of poly (1, 3-alkenes)-block-poly (alkylene oxides) copolymers were synthesized by two-step sequential anionic polymerization. 1, 3-Butadiene and ethylene oxide were purified by stirring with vacuum-dried n-butyllithium twice for 30 min. Six molecular weights (6-53 kg mol⁻¹) of hydroxyl terminated 1, 2-polybutadiene were synthesized via anionic polymerization of 1,3-butadiene with sec-butyllithium in tetrahydrofuran (THF) at -75 °C for 8 h; the polymer chains were end-capped with a single ethylene oxide unit at 27 °C, and the polymerization was terminated by the addition of acidic methanol. A concentrated solution of PB-OH in dichloromethane was precipitated into an excess of cold methanol, isolated via vacuum filtration, and dried under vacuum at 40 °C for 72 h prior to use. PB-PEO diblocks with a nearly constant volume fraction of PEO were prepared by subsequent anionic polymerization of ethylene oxide. The polymerization was performed in THF at 40 °C for 24 h in the presence of PB-OH with potassium naphthalenide. The polymerization was terminated by the addition of acidic methanol. PB-PEO di-blocks were freeze dried in benzene with 0.1 wt % BHT as an antioxidant under vacuum (<100 mTorr) at 27 °C for 24 h prior to use.

Amphiphilic block copolymers have many applications due to their versatility, ranging from medicine to material science, for instance the construction of nano-reactors, drug delivery systems, nanoporous membranes and biosensors. Bearing resemblance to natural amphiphilic lipids, synthetic amphiphilic block copolymers comprising covalently bonded hydrophobic and hydrophilic segments, possess an intrinsic ability to self-assemble into several meso phases. By adjusting the block length and hydrophilic/lipophilic balance (HLB) factor, multiple morphologies and architectural varieties of block copolymer aggregates can be synthesized, ranging from micelles, rods, tubules to vesicles. Poly(butadiene-b-(ethylene oxide)) (PBD-PEO) amphiphilic block copolymers are of particular importance in studying lyotropic phase behavior due to the low glass transition temperature of the poly butadiene (PBD) block of about 10° C which renders the block copolymers dispersible in aqueous environment.

In view of the above it is pertinent to note that there is a need to develop new process for the preparation of PD-*b*-PAO having further improved physical and/or chemical properties besides high purity levels. Hence it was thought worthwhile by the inventors of the present application to explore novel process for the preparation of PD-*b*-PAO.

The present invention particularly relates to the specific use of catalyst combinations (Crown ether [15C5, 18C6, DCH18C6 and DCH24C8] in combination with potassium tert-butoxide) for the living anionic ring-open polymerization of alkylene oxide monomers by one pot process to produce PD-b-PAO.

The present invention further relates to various well-defined amphiphilic macromolecular architectures designed and synthesized with different alkylene oxide and 1, 3-diene monomers by the best catalyst combination.

The present invention yields in highly pure PD-*b*-PAO copolymers compares to prior art with various molecular weights (1.4 to 8^{∗}10³ g/mol) and hydrophilic fractions (0.25 to 0.8) of poly(alkylene oxide) block.

### OBJECTIVE OF THE INVENTION

The main object of the present invention relates to an improved process for the preparation of poly (1, 3-alkenes)-block-poly (alkylene oxides) copolymers.

Another object of the present invention relates to a one-pot process for the preparing poly(1,3-alkenes)-block-poly(alkylene oxides) copolymers.

In another object of the present invention relates to the purification of crude amphiphilic block copolymers PD-b-PAO.

### SUMMARY OF THE INVENTION

The present invention relates to a process for the one pot preparation of Poly(1,3-alkenes)-block-poly(alkylene oxide) copolymer of Formula (I) 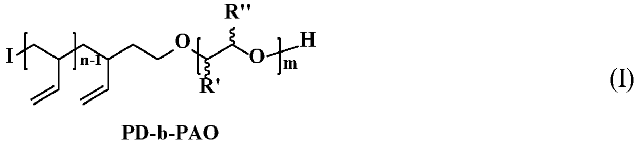 comprising the steps of-
a) reacting 1,3-alkenes of Formula (II) with Initiator-1 of Formula I-Li in presence of a solvent to provide Lithium Poly(1,3-alkenes)(III), followed by end capping with alkylene oxide to provide a Lithium alkoxy poly(1,3-alkene) of Formula (IV); and 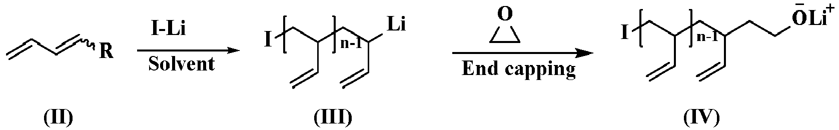
b) replacing of Lithium counter ion of Lithium alkoxy poly (1, 3-alkene) of formula (IV) with Initiator-2 comprising potassium tertiary butoxide and 18-Crown ethers for alkylene oxide polymerization, followed by reaction with alkylene oxide to yield Poly (1,3-alkenes)-block-poly(alkylene oxide) copolymer. 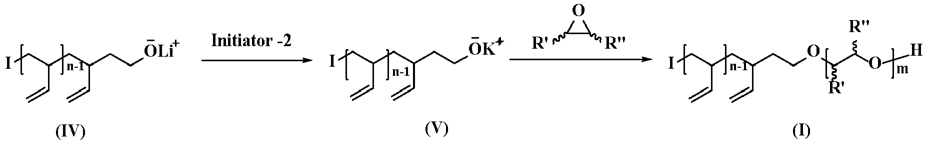
The present invention further relates to a process for the purification crude amphiphilic block copolymers PD-b-PAO having oligomers and low molecular weight polymers and inorganic salts, comprising:
a. dissolution of the crude polymer in Ethyl acetate and washing with the pure water to eliminate the oligomers, 18C6 and inorganic content;
b. extracting using Soxhlet extraction process by Embedding the polymer on silica gel and then refluxing with acetone for 10 h; and
c. filtration of the polymer, followed by removal of solvent to yield highly pure copolymers PD-b-PAO.

The present invention further relates to one pot process for the preparation of Poly(1,3- alkenes)-block-poly(alkylene oxide) copolymer of Formula (I) 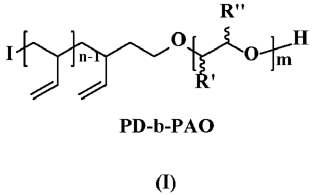 comprising the steps of-
a) reacting 1,3-alkenes of Formula (II) with Initiator-1 of Formula I-Li in presence of a solvent to provide Lithium Poly (1,3-alkenes)(III), followed by end capping with alkylene oxide to provide a Lithium alkoxy poly(1,3-alkene) of Formula (IV); and 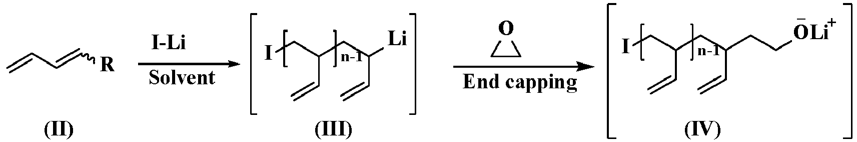
b) replacing of Lithium counter ion of Lithium alkoxy poly(1,3-alkene) of formula (IV) with Initiator-2 comprising potassium tertiary butoxide and 18-Crown ethers for alkylene oxide polymerization, followed by reaction with alkylene oxide to yield Poly (1,3-alkenes) block-Poly (alkylene oxide) copolymer.

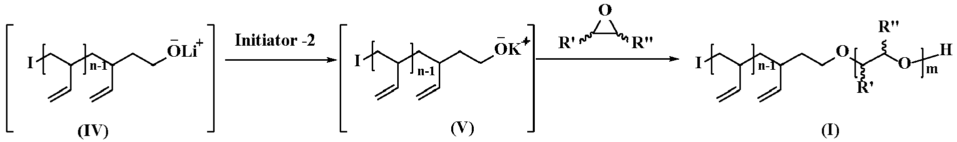

### DETAILED DESCRIPTION OF THE INVENTION

The present invention relates to a process for the preparation of Poly (1, 3-alkenes)-block-poly (alkylene oxide) copolymer of Formula (I) comprising the steps of reacting 1, 3-alkenes with metal initiator in the presence of solvent selected from tetrahydrofuran to provide metal alkoxy poly (1, 3-alkene) of formula III, followed by end capping with ethylene oxide to provide a metal alkoxy poly (1, 3-alkene) of formula (IV); wherein replace of metal counter ion of metal alkoxy poly (1, 3-alkene) of formula (IV) with Initiator-2 comprising of potassium tertiary butoxide and 18-Crown ethers for alkylene oxide polymerization, followed by reaction with alkylene oxide to yield Poly (1, 3-alkenes)-block-poly (alkylene oxide) copolymer; wherein the metal initiator is selected from the group consisting of n-Butyl Lithium and sec-butyllithium more preferably sec-butyllithium; the solvent is selected from tetrahydrofuran, hexane and water; the alkylene oxide is selected from 1,2-Epoxybutane, cis-2,3-Epoxybutane, 1,2-Epoxyhexane, 3,4-Epoxy-1-butene, 1,2-Epoxy-3-phenoxypropane, (2,3-Epoxypropyl)benzene, (±)-Propylene oxide, Styrene oxide, α-Pinene oxide, Allyl glycidyl ether, Glycidyl 2,2,3,3-tetrafluoropropyl ether, Cyclohexene oxide and Furfuryl glycidyl ether; wherein 1,3-alkenes monomers are selected from 1,3-Butadiene, 1-Methoxy-1,3-Butadiene, trans-1,3-Pentadiene, 1-Acetoxy-1,3-butadiene and Isoprene; wherein solvent is selected from Tetrahydrofuran, and end capping had been performed using alkylene oxide selected from Ethylene oxide.

Another embodiment of the present invention relates to one pot process for the preparation of Poly (1, 3-alkenes)-block-poly (alkylene oxide) copolymer of Formula (I) 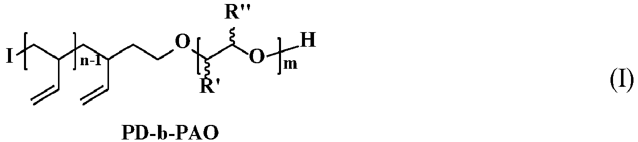 comprising the steps of -
a) reacting 1,3-alkenes of Formula (II) with Initiator-1 of Formula I-Li in presence of a solvent to provide Lithium Poly (1,3-alkenes)(III), followed by end capping with alkylene oxide to provide a Lithium alkoxy poly(1,3-alkene) of Formula (IV); and 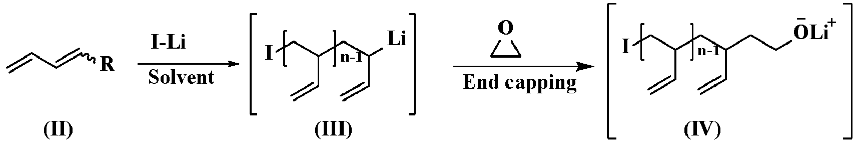
b) replacing of Lithium counter ion of Lithium alkoxy poly (1, 3-alkene) of formula (IV) with Initiator-2 comprising of potassium tertiary butoxide and 18-Crown ethers for alkylene oxide polymerization, followed by reaction with alkylene oxide to yield Poly (1,3-alkenes) block-Poly (alkylene oxide) copolymer. 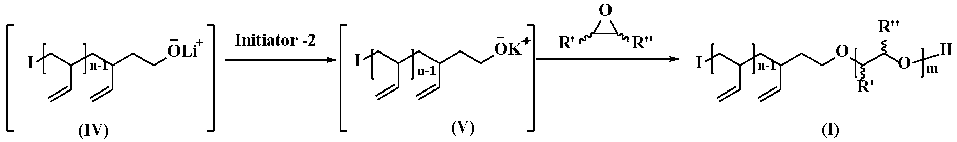
Wherein the metal initiator is selected from the group consisting of n-Butyl Lithium and sec-butyllithium more preferably sec-butyllithium; the solvent is selected from tetrahydrofuran, hexane and water; the alkylene oxide is selected from 1,2-Epoxybutane, cis-2,3-Epoxybutane, 1,2-Epoxyhexane, 3,4-Epoxy-1-butene, 1,2-Epoxy-3-phenoxypropane, (2,3-Epoxypropyl)benzene, (±)-Propylene oxide, Styrene oxide, α-Pinene oxide, Allyl glycidyl ether, Glycidyl 2,2,3,3-tetrafluoropropyl ether, Cyclohexene oxide and Furfuryl glycidyl ether; wherein 1,3-alkenes monomers are selected from 1,3-Butadiene, 1-Methoxy-1,3-Butadiene, trans-1,3-Pentadiene, 1-Acetoxy-1,3-butadiene and Isoprene; wherein solvent is selected from Tetrahydrofuran, and end capping had been performed using alkylene oxide selected from Ethylene oxide.

Another embodiment of the present invention relates to a process for the purification crude amphiphilic block copolymers PD-b-PAO having oligomers and low molecular weight polymers and inorganic salts, comprising:
a. dissolution of the crude polymer in Ethyl acetate and washing with the pure water to eliminate the oligomers, 18C6 and inorganic content;
b. extracting using Soxhlet extraction process by Embedding the polymer on silica gel and then refluxing with acetone for 10 h; and
c. filtration of the polymer, followed by removal of solvent to yield highly pure copolymers PD-b-PAO.

### Examples:

### Example 1: Purification of monomers (Distillation of 1, 3-diene Monomer)

1, 3-diene and n-butyl lithium in hexane were charged in to 500 ml two neck round bottom flask and stirred for one hour to remove the moisture. The monomer is freezing by adding the liquid nitrogen and melting under argon atmosphere for removal of dissolved oxygen. Distillation has been started slowly at -45° C under static vacuum, after completion of distillation the material was stored in deep freezer and maintained at -30° C.

### Example 2: Distillation of Alkylene oxide Monomer

Alkylene oxide monomer and calcium hydride were taken into a round bottom flask and stirred for one hour to remove the moisture. The monomer is freezing by adding the liquid nitrogen and melting under argon atmosphere for removal of dissolved oxygen. Distillation has been started slowly at -45° C under static vacuum, after completion of distillation the material was stored in deep freezer and maintained at -30° C.

### Example 3: Distillation of Tetrahydrofuran (THF)

Distillation of THF has been performed in two stages and is described below

### First stage Distillation of THF

Tetrahydrofuran, sodium metal and benzophenone were taken in round bottom flask under argon atmosphere and reflux for 1 hour at 80° C, after completion of reflux collected the THF under argon and allowed to cool at room temperature. The collected THF in threaded air tight RB flask before starting the distillation.

### Second Distillation of THF:

First stage collected tetrahydrofuran is taken in round bottom flask and n-butyl lithium in hexane solution was added to slowly in drop wise until the yellow colour is developed. Freezed the solvent mixture under liquid nitrogen and melted under argon atmosphere for the removal of the oxygen traces. Finally THF is distilled off in the solvent collector and has further used for polymerization reaction.

### Example 4: Typical procedure for the preparation of Anionic Polymerization Procedure of poly (1,3-butadiene)-b-poly(ethylene oxide)

The polymerization set up is made by connecting the polymerization reactor made with ace threads with condenser manifold made by ace threaded joints. The total reaction set up is heated with hot air gun under high vacuum after few minutes the reaction setup is cooled under argon. 100 ml of distilled THF is added slowly added to the polymerization reaction, double distilled 1, 3-butadiene is added through cannula THF containing reactor and maintained at -78° C, an initiator sec-butyllithium solution is added to the reaction mixture at same temperature. The reaction is continued for four hours at -60° C. Finally, ethylene oxide had been added to the reaction mixture for end capping and maintained for one hour. After completion of the reaction to get the capping extent of Lithiated poly (1, 3-butadiene) is reacted with potassium tert-butoxide to obtain poly (1, 3-butadine) with its potassium salt. Ethylene oxide product has been added to the above reaction mixture through cannula under cold condition at argon atmosphere. The reaction is maintained for 24 hours at 40° C under argon atmosphere to get the reaction mass is quenched with 1N HCl in methanol to obtain a title product with high purity.

*While the foregoing pages provide a detailed description of the preferred embodiments of the invention, it is to be understood that the summary, description and examples are illustrative only of the core of the invention and non-limiting. Furthermore, as many changes can be made to the invention without departing from the scope of the invention, it is intended that all material contained herein be interpreted as illustrative of the invention and not in a limiting sense.*

## Claims

1. A process for the one pot preparation of Poly(1,3-alkenes)-block-poly(alkylene oxide) copolymer of Formula (I) 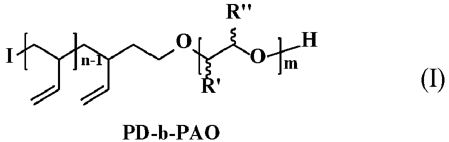 comprising the steps of -
a) reacting 1,3-alkenes of Formula (II) with Initiator-1 of Formula I-Li in presence of a solvent to provide Lithium Poly(1,3-alkenes)(III), followed by end capping with alkylene oxide to provide a Lithium alkoxy poly(1,3-alkene) of Formula (IV); and 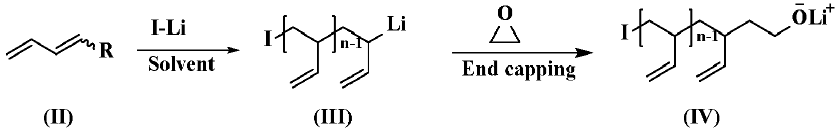
b) replacing of Lithium counter ion of Lithium alkoxy poly (1, 3-alkene) of formula (IV) with Initiator-2 comprising potassium tertiary butoxide and 18-Crown ethers for alkyleneoxide polymerization, followed by reaction with alkylene oxide to yield Poly (1,3-alkenes)-block-poly(alkylene oxide) copolymer.

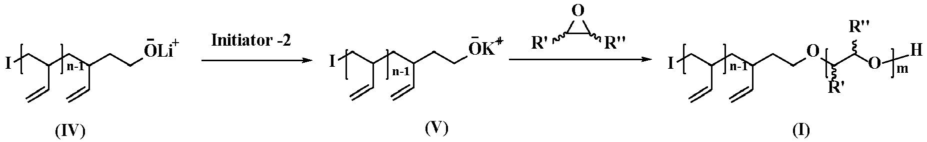

2. A process for the preparation of Poly(1,3-alkenes)-block-poly(alkylene oxide) copolymer according to claim 1, wherein 1,3-alkenes monomers are selected from 1,3-Butadiene, 1-Methoxy-1,3-Butadiene, trans-1,3-Pentadiene, 1-Acetoxy-1,3-butadiene and Isoprene.

3. A process for the preparation of Poly(1,3-alkenes)-block-poly-(alkylene oxide) copolymer according to claim 1, wherein Initiator-1 is selected from n-Butyl Lithium and sec-butyllithium.

4. A process for the preparation of Poly(1,3-alkenes)-block-poly(alkylene oxide) copolymer according to claim 1, wherein solvent is selected from Tetrahydrofuran and end capping had been performed using alkylene oxide selected from Ethylene oxide.

5. A process for the preparation of Poly(1,3-alkenes)-block-poly(alkylene oxide) copolymer according to claim 1, wherein alkylene oxide monomers are selected from 1,2-Epoxybutane, cis-2,3-Epoxybutane, 1,2-Epoxyhexane, 3,4-Epoxy-1-butene, 1,2-Epoxy-3-phenoxypropane, (2,3-Epoxypropyl)benzene, (±)-Propylene oxide, Styrene oxide, α-Pinene oxide, Allyl glycidyl ether, Glycidyl 2,2,3,3-tetrafluoropropyl ether, Cyclohexene oxide and Furfuryl glycidyl ether.

6. A process for the purification crude amphiphilic block copolymers PD-b-PAO having oligomers and low molecular weight polymers and inorganic salts, comprising:
a) dissolution of the crude polymer in Ethyl acetate and washing with the pure water to eliminate the oligomers, 18C6 and inorganic content;
b) extracting using Soxhlet extraction process by Embedding the polymer on silica gel and then refluxing with acetone for 10 h; and
c) filtration of the polymer, followed by removal of solvent to yield highly pure copolymers PD-b-PAO.

7. A process for the purification crude amphiphilic block copolymers PD-b-PAO according to claim 6, acetone is selected for soxhlet extraction.

8. One pot process for the preparation of Poly(1,3-alkenes)-block-poly(alkylene oxide) copolymer of Formula (I) 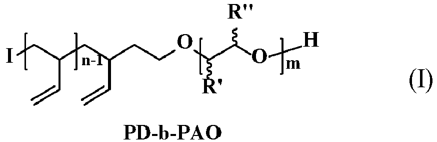 comprising the steps of -
a) reacting 1,3-alkenes of Formula (II) with Initiator-1 of Formula I-Li in presence of a solvent to provide Lithium Poly(1,3-alkenes)(III), followed by end capping with alkylene oxide to provide a Lithium alkoxy poly(1,3-alkene) of Formula (IV); and 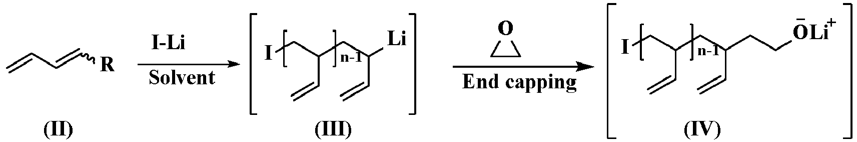
b) replacing of Lithium counter ion of Lithium alkoxy poly (1, 3-alkene) of formula (IV) with Initiator-2 comprising potassium tertiary butoxide and 18-Crown ethers for alkylene oxide polymerization, followed by reaction with alkylene oxide to yield Poly (1,3-alkenes)-block-poly(alkylene oxide) copolymer.

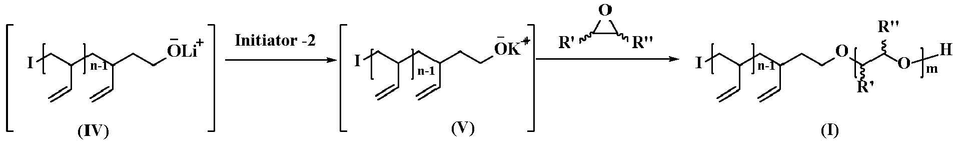

9. One pot process for the preparation of Poly(1,3-alkenes)-block-poly(alkylene oxide) copolymer according to claim 6, wherein 1,3-alkenes monomers are selected from 1,3-Butadiene, 1-Methoxy-1,3-Butadiene, trans-1,3-Pentadiene, 1-Acetoxy-1,3-butadiene and Isoprene and Initiator-1 is selected from n-Butyl Lithium and secondary butyl lithium.

10. One pot process for the preparation of Poly (1,3-alkenes) block-Poly (alkylene oxide) copolymer according to claim 6, wherein solvent is selected from Tetrahydrofuran end capping had been performed using alkylene oxide selected from Ethylene oxide; alkylene oxide monomers selected from Ethylene oxide, 1,2-Epoxybutane, cis-2,3-Epoxybutane, 1,2-Epoxyhexane, 3,4-Epoxy-1-butene, 1,2-Epoxy-3-phenoxypropane, (2,3-Epoxypropyl)benzene, (±)-Propylene oxide, Styrene oxide, α-Pinene oxide, Allyl glycidyl ether, Glycidyl 2,2,3,3-tetrafluoropropyl ether, Cyclohexene oxide and Furfuryl glycidyl ether.
